# EUROPEAN PATENT APPLICATION

(11) **EP 0 859 529 A2**
(43) Date of publication of application: **19.08.1998**
(21) Application number: 97306346.4
(22) Date of filing: 20.08.1997
(51) Int. Cl.: H04Q 7/24, H04Q 7/26, H04M 3/42

(54) **System and methods for providing intelligent wireless access system**

(30) Priority: 18.02.1997 US 802187
(71) Applicant: AT&T Corp., New York, NY 10013-2412 (US)
(72) Inventor: Chang, James Jen-Chei, Randolph, New Jersey 07869 (US); Chow, Albert, Hillsdale, New Jersey 07642 (US)
(74) Representative: Pearce, Anthony Richmond

(57) **Abstract**

Systems and methods for providing intelligent wireless access systems are presented. A microcell cellular architecture is provided in which a digital switch and controller are provided in conjunction with a number of intelligent radio ports. Each of the intelligent radio ports provides at least one voice channel to both the microcell and to the traditional wireless macrocell. Calls placed within the microcell, however, do not access the traditional public macrocell. This architecture enables the microcell to be easily integrated into an existing wire-based system such that calls placed to the wire-based system are simultaneously forwarded to a cell phone (thereby ringing at both phones using a single phone number). If the call is answered by the cell phone within the confines of the microcell (i.e., via an intelligent radio port rather than a conventional wireless base station), the call is handled as a wire-based call and the type of phone used to answer the call is transparent to the caller.

## Description

### Background of the Invention

This invention relates to the transmission of wireless (e.g., cellular) communications. More particularly, this invention relates to systems and methods for providing integrated wireless and wire-based telecommunications and for extending public wireless service (e.g., cellular/PCS) into business premises.

Telephone systems are traditionally either wire-based or wireless. Wire-based systems are traditionally formed by having telephones coupled to a switch (for example, in an office PBX system) and that switch is connected to the local exchange carrier ("LEC") central office switches and then to the outside world. When an incoming call is made to the business from the outside world, the call goes from the LEC switches and through the PBX system to the recipient, with the PBX system providing the proper signaling (e.g., a double-ring to signify an outside call).

Wireless systems are now often cellular systems, though wireless systems may also include the older, two-way mobile communications systems (which typically required a single large powerful transmitter to cover a given geographic area). Cellular systems commonly include a series of small base stations that define small, individual cells within the geographic area that a wireless service provider covers. Each of the base stations are controlled by a base station controller and in turn by a central office switch commonly known as a Mobile Switching Center ("MSC") that provides the necessary switching functions so that calls are properly transferred when an individual passes from one base station to another during an active call. The MSC also includes one or more interfaces to the wire-based telephone system which is known as the Public Switched Telephone Network ("PSTN"). Calls between the cellular system and the PSTN are controlled as cellular calls and the owner of the cellular telephone is billed for the call regardless of whether the owner originated the call (versus wire-based calls where the originator always pays).

When an individual or company desires to add cellular service, they contact a wireless service provider who provides a service that is essentially separate and distinct from the existing wire-based service. Thus, if an office with an existing PBX system wants to add cellular service, they simply purchase a number of cellular phones and subscribe for a number of cell phone numbers. Incoming calls to the wire-based system in the business premises environment are directed through the PBX system to the recipient and are billed to the caller (unless the call is a 1-800 call, in which case the recipient pays). Incoming calls to a cell phone number are directed by the MSC of the wireless service provider to the proper cell phone and the cell phone is billed for the air time portion of the call. Assuming that each individual that has a cell phone also has a wire-based phone at his or her desk, those individuals now have two different phone numbers to keep track of. If any of those people also have a personal cell phone, a third phone number adds to the confusion. Additional problems occur when a call is placed to a user having both a wire-based phone and a cell phone and the user is close to, but not directly at the location of the wire-based phone. Under such circumstances, no one would answer the wire-based call and the caller might then have to place a more expensive wireless call to contact the user.

It would therefore be desirable to provide systems and methods for integrating wire-based phone systems with wireless phone systems in the business premises environment so that incoming calls are made to a single number for both wire-based and wireless service.

It would be additionally desirable to provide systems and methods for integrating wire-based phone systems with wireless phone systems in the business premises environment such that either phone system may still be operated as an independent entity in the event of an outage in the other phone system.

It would also be desirable to provide systems and methods that enable a user to easily integrate wireless service into an existing wire-based system.

It would be further desirable to provide systems and methods for providing wireless telephone service to wire-based customers such that wireless calls are treated as wire-based calls (e.g., as cordless phone calls) when the recipient is located in close proximity to the wire-based phone.

It would be still further desirable to provide wireless systems and methods in which wireless calls placed within a predetermined area are charged in the same way as wire-based calls.

### Summary of the Invention

The above and other objects of the invention are met by the present invention in which wireless services are transparently integrated with wire-based services in business premises environments. The present invention provides that incoming calls placed to a given telephone number may be answered by either a wireless phone or a wire-based phone, depending on the location of the called party, without the calling party knowing the method used to answer the call. Wireless service is provided in existing environments by establishing one or more microcells that provides cellular coverage within the customer's premises. The microcell system is coupled to both the standard macrocell system (i.e., the primary cellular system of the wireless service provider) and the wire-based system via an intelligent radio port interface ("IRP"). The intelligent radio port is connected to a digital switch via as an Integrated Services Digital Network ("ISDN") basic rate interface ("ISDN/BRI") that provides two voice channels and a data channel ("2B+D"). The digital switch is connected to a controller which can be located on the customer's premises or in the service provider's central office. The controller controls the transmission and receipt of calls to the subtending IRP cell phones, and also provides the signaling interfaces between the microcell system and the standard macrocell system of the wireless service provider to handle subscriber registration, authentication and services feature applications. The digital switch may also be connected to a LEC through digital trunk interfaces.

Further advantages of the present invention may be achieved by handling calls within the microcell system in the same manner as wire-based calls. For example, a business having an existing wire-based telephone system desires to utilize wireless technology without incurring the expense and complexity of having to upgrade its existing system. The wireless systems and methods of the present invention provide that business with one or more microcells, as necessary to provide coverage within the business environment. The microcells are coupled together via a controller that operates such that calls placed within the microcells are treated the same as if someone had simply dialed an extension using the wire-based system. Calls placed from the wire-based system to cell phones within the microcells are treated in the same manner, for example, by only requiring the dialing of an extension for internal calls. The dialed extension rings two telephones instead of just one; the wire-based desk phone and the cell phone for the called individual. As soon as either phone is answered, the ringing stops on the other phone. If the cell phone was answered, the IRP controller knows the call came through the IRP and handles the call appropriately. Calls placed through the microcell system by dialing wire-based telephone directory numbers can be treated as if they were wire-based calls (e.g., no charges for air-time). Calls placed through the microcell by dialing the Mobile Identification Number ("MIN") can still be treated as wireless calls and handled differently (e.g., by charging for air-time). Therefore, all calls placed to the cell phone that are answered via the IRP can be processed as wire-based calls.

### Brief Description of the Drawings

The above and other objects and advantages of the invention will be apparent upon consideration of the following detailed description, taken in conjunction with the accompanying drawings, in which like reference characters refer to like parts throughout, and in which:
FIG. 1 is a schematic diagram of a telecommunication network that illustrates the principles of the present invention;
FIG. 2 is a flow diagram showing a preferred method of the present invention for performing registration and authentication procedures in relation to the telecommunication system shown in FIG. 1;
FIG. 3 is a flow diagram showing a preferred method of the present invention for processing calls between cell phones within the microcells of the telecommunication system shown in FIG. 1;
FIG. 4 is a flow diagram showing a preferred method of the present invention for processing incoming calls in relation to the telecommunication system shown in FIG. 1; and
FIG. 5 is a flow diagram showing a preferred method of the present invention for handing off calls within the microcells of the telecommunication system shown in FIG. 1.

### Detailed Description of the Drawings

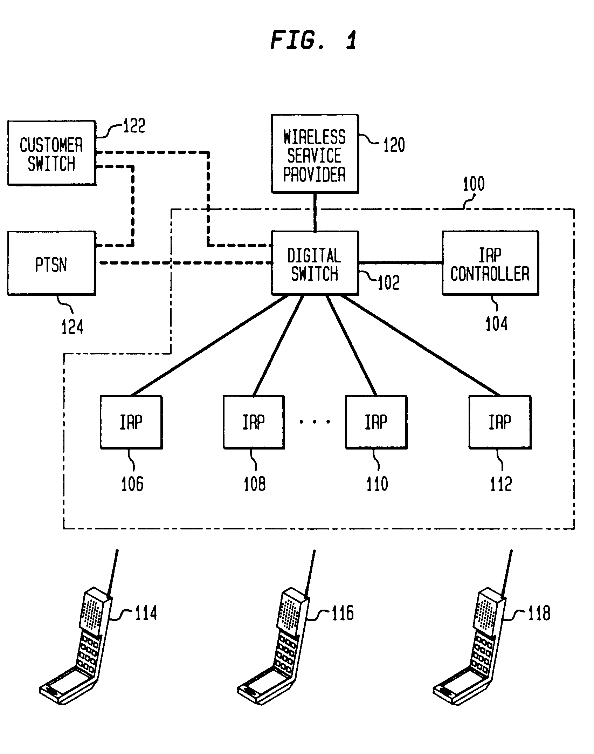

The present invention provides intelligent wireless access by providing a microcell-based wireless system that may be easily integrated with an existing wire-based system, the PSTN and/or a standard macrocell wireless system. FIG. 1 shows microcell 100 as a self-contained wireless system that may be integrated easily within an existing telecommunications environment, such as a standard PBX system in an office. Microcell 100 includes digital switch 102, IRP controller 104 and IRPs 106-112 (while only four (4) IRPs are shown, persons skilled in the art will appreciate that any number of IRPs may be used, depending on the physical size of the microcell system). Also shown in FIG. 1 are cellular phones 114, 116 and 118, macrocell system 120 (i.e., a wireless service provider), customer switch 122 and PSTN 124. The inter-connections between the digital switch 102, the customer switch 122 and PSTN 124 are shown as dashed lines to indicate the various options, as set forth in more detail below, that may be used in accordance with the present invention.

Digital switch 102 is preferably a stand-alone programmable ISDN switch that supports ISDN/Basic Rate Interface ("ISDN/BRI") (ISDN/BRI provides two 64 kbps B-channels and one 16 kbps D-channel), ISDN/Primary Rate Interface ("ISDN/PRI")(ISDN/PRI provides twenty-three 64 kbps B-channels and one 16 kbps D-channel), and the standard Tip/Ring interface. Digital switch 102 provides local switching for the IRPs, all switching and transport of incoming and outgoing calls to macrocell 120 (in conjunction with IRP controller 104), and the ability to integrate microcell 100 with customer switch 122. In a preferred embodiment, digital switch 102 handles communications between each of IRPs 106-112 and IRP controller 104 via the ISDN/BRI D-channel 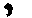 s X.25 user-to-user (or peer-to-peer) application layer protocol. The connection between digital switch 102 and customer switch 122 (which may be, for example, a PBX system) may be a standard T1 trunk or an analog subscriber loop interface, such that simultaneous ringing occurs of the wire-based telephone and its associated cell phone upon an incoming call.

IRP controller 104 provides the core communication and control functions through the open standard interfaces (e.g., ISDN/BRI) within microcell 100. For example, controller 104 interacts with the wireless service provider network to provide subscriber registration, roaming, authentication and call routing operations. In this manner, digital switch 102's switching and transport operations are performed based on command received from IRP controller 104 so that mobility between the private network (microcell 100) and the public network (macrocell 120) is maintained. IRP controller 104 maintains a visitor location register ("VLR") for registration and authentication, as well as interfacing with macrocell 120's home location register ("HLR") via an SS7/IS-41 interface to support mobility management and to assist the IRP 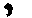 s in call processing. Additionally, controller 104 coordinates information between the IRP 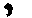 s and the wireless service provider to support the billing process, as described more fully below.

IRPs 106-112 are intelligent radio ports that provide standard wireless functions within the microcell environment. Each IRP is envisioned as a small, self-contained, plug-and-play base station that supports one or more RF carriers, each having at least two digital traffic channels and one digital control channel to provide voice services. An additional digital control channel should also be provided for signaling communications between the IRP and other wireless terminals. Each of IRPs 106-112 is connected to digital switch 102 via an ISDN interface such as ISDN/BRI. The IRPs provide the standard air interface control functions, including the necessary registration and terminal handoff functions for mobile calls.

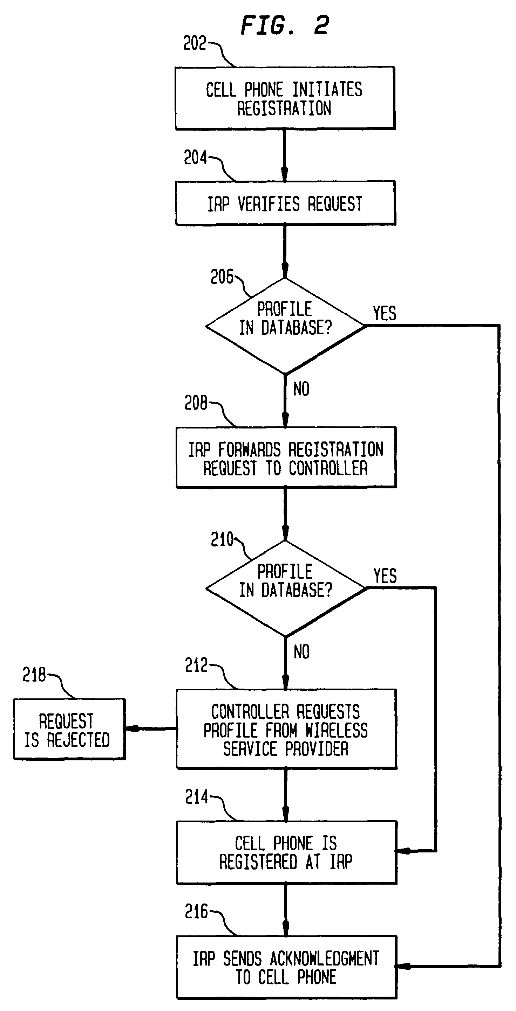

Cellular telephones 114, 116 and 118 are standard cellular telephones that may operate either with microcell 100 or macrocell 120, depending on the location of the cell phone when a call is received. Persons skilled in the art will appreciate that the cellular telephones described herein may also be standard paging devices or combinations thereof. If the cell phone is within the physical proximity of one of the IRPs and the IRP answers the call, then, in accordance with the principles of the present invention, the call is processed in the same manner as a wire-based call. If, however, a standard cell base station answers the call, then the call is simply processed as a cell call and the called party is billed for air time, etc. Once the cell phone is turned on (and assuming that the cell phone is located within the reception area of an IRP), the cell phone initiates a registration and authentication procedure that is accomplished in conjunction with the answering IRP and IRP controller 104, as shown in FIG. 2.

FIG. 2 shows a flow diagram of a preferred method of accomplishing registration and authentication of cell phones that are turned on while located within the reception area of a microcell IRP. Once turned on, the cell phone transmits a registration request to the IRP in a step 202. The IRP verifies the registration request by accessing the IRP 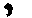 s visitor database in a step 204. In a step 206, a test is made to determine if the cell phone 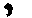 s user profile exists in the IRP visitor database. If the user profile exists, an acknowledgment is sent to the cell phone in a step 216, otherwise, in a step 208, the IRP forwards the request to IRP controller 104. IRP controller 104 performs a similar test, in a step 210, to determine if the cell phone user profile is in its visitor database. If the profile exists, the cell phone is currently registered within microcell 100, but registered to another IRP. Therefore, controller 104, in a step 214, deregisters the cell phone from its current IRP and registers the cell phone to the requesting IRP. If the user profile does not exist in the controller database, controller 104, in a step 212, requests the user profile from the wireless service provider. If the user profile does not exist at the wireless service provide, the registration request is rejected, in a step 218. Once the cell phone is registered at the requesting IRP (and deregistered anywhere else), the requesting IRP, in a step 216, sends an acknowledgment to the cell phone and calls may be processed.

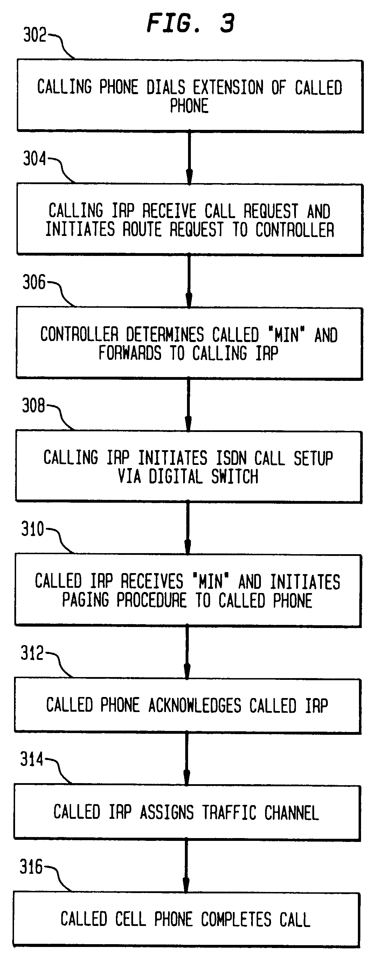

FIG. 3 shows a flow diagram of a preferred method of processing calls between two cell phones within microcell 100. Processing begins in a step 302 when the extension of the called phone is dialed on the calling phone, which causes a call request to be sent to the calling phone 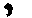 s IRP. In a step 304, the calling IRP receives the call request and initiates a route request to controller 104. Controller 104, in a step 306, determines the Mobile Identification Number ("MIN") of the called cell phone (based on the dialed extension and the last registered IRP for the called cell phone) and forwards the MIN to the calling IRP. The calling IRP initiates ISDN call setup via digital switch 102 and transmits the MIN to the called IRP in a step 308. In a step 310, the called IRP receives the MIN and initiates paging procedures between the called IRP and the called cell phone. The called cell phone acknowledges the IRP in a step 312. After receiving the acknowledgment, the called IRP, in a step 314, assigns a traffic channel for the call. Once the traffic channel is assigned, the called cell phone, in a step 316, completes the call. Because the call is processed entirely within microcell 100, macrocell 120 is not involved and no air time is charged to the customer.

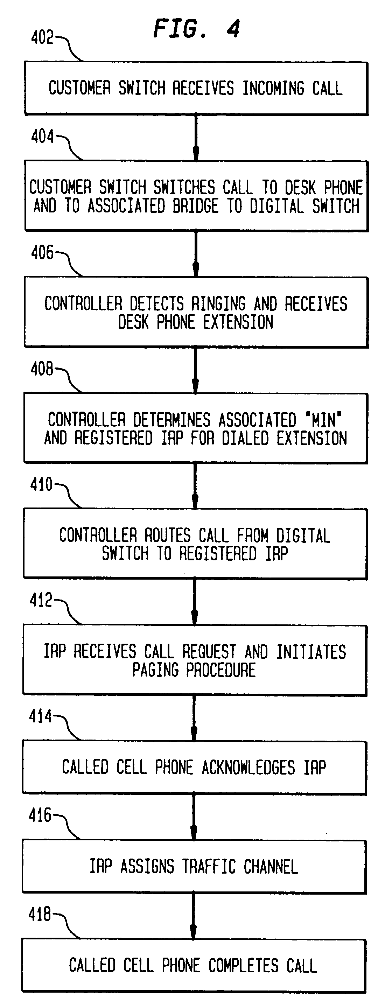

FIG. 4 shows a flow diagram of a preferred method of processing incoming calls to a telecommunication system having a customer switch and a microcell, such as the system shown in FIG. 1. Under such circumstances, the connection shown between digital switch 102 and PSTN 124 would not exist, but the connection between digital switch 102 and customer switch 122, and the connection between customer switch 122 and PSTN 124 would exist (thus, incoming calls from the "outside wire-based world" all come through customer switch 122). Persons skilled in the art will appreciate that customer switch 122 is not required, in which case the connection between digital switch 102 and PSTN 124 would provide microcell 100 with access to incoming wire-based calls.

Incoming call processing begins in a step 402 when customer switch 122 receives an incoming call. As described above, customer switch 122 is preferably a PBX system, but any conventional system or switch may be utilized as customer switch 122, provided that customer switch 122 can process telephone calls. In a step 404, customer switch 122 switches the incoming call to the extension that corresponds to the dialed number and also switches the call to the associated bridge to digital switch 102. The bridge to digital switch 102 is a bridge that functions to transfer all incoming calls and the associated extensions (i.e., the extension corresponding to the dialed number) to digital switch 102. IRP controller 104, which monitors digital switch 102, detects the ringing associated with the incoming call and receives the associated extension in a step 406. Controller 104 determines the MIN and the registered IRP that corresponds to the associated extension in a step 408. In a step 410, controller 104 routes the incoming call from digital switch 102 to the registered IRP. The registered IRP, in a step 412, receives the call request and initiates a paging procedure to the proper cell phone based on the MIN information. The called cell phone, in a step 414 sends the IRP an acknowledgment. After receiving the acknowledgment, the IRP assigns the traffic channel for the call in a step 416. Once the traffic channel is assigned, the called cell phone, in a step 418, completes the call.

Once the call is answered by either the wire-based desk phone, or the associated cell phone, the ringing stops at the other phone. In this manner, the type of phone used to answer the call is transparent to the phone caller, who only needs to know a single phone number to dial a party. An additional advantage of the present invention is the fact that the microcell system may be easily integrated into existing digital phone systems. All that is required is a simple programming change so that all incoming calls are forwarded to a second number simultaneously with the forwarding to the associated desk extension phone. The second number corresponds to the digital switch which, in cooperation with the IRP controller, determines which cell phone, if any, the call should be routed to. If the incoming call is answered by a cell phone within the confines of the microcell system, the call is treated the same as a wire-based call, and the caller is billed for wire-based telephone time (no billing for air time is required because the macrocell is not involved).

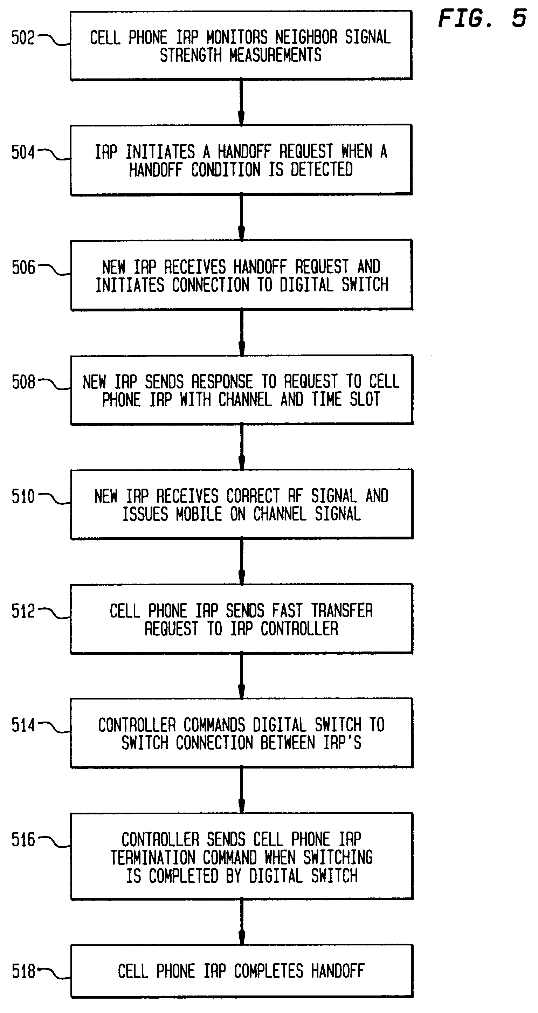

FIG. 5 shows a flow diagram of a preferred method of handing off calls between IRPs within microcell 100. During active cell phone calls, the IRP constantly monitors neighbor signal strength measurements received from the associated cell phone, in a step 502. Upon the detection of a handoff condition, based on the neighbor signal strength measurement, the called IRP, in a step 504, initiates a handoff request to digital switch 102, preferably via the ISDN D-channel signal. The handoff request is transferred to the new IRP, in a step 506, which initiates a connection to digital switch 102 in preparation for the incoming cell phone signal. In a step 508, the new IRP sends the old IRP a response to the handoff request that contains the new RF channel and timeslot that the cell phone is to switch to. Once the cell phone is transmitting the new RF signal, the new IRP, in a step 510, issue a Mobile On Channel signal to the old IRP. Upon receipt of the Mobile On Channel signal, the old IRP sends a fast transfer request to IRP controller 104 in a step 512. Controller 104 commands digital switch 102 to switch the connection between the IRPs in a step 514. Once digital switch 102 has completed the switch between the IRPs, controller 104, in a step 516, issue a termination command to the old IRP. The old IRP, in a step 518, disconnects the bearer channel and completes the handoff process. In this manner, mobile calls within the private microcell system are transferred without involving the public macrocell system.

Thus, systems and techniques for providing intelligent wireless access are presented. Persons skilled in the art will appreciate that the present invention may be practiced by other than the described embodiments, which are presented for purposes of illustration and not of limitation, and the present invention is limited only by the claims which follow.

## Claims

1. A method of integrating wireless service with wire-based service in an existing wire-based environment, said method;
CHARACTERIZED BY the steps of:
connecting a digital switch to an existing customer switch, said customer switch being coupled to at least one wire-based telephone and being capable of providing digital communications;
connecting a plurality of intelligent radio ports to said digital switch;
connecting a controller to said plurality of intelligent radio ports and to said digital switch, said controller operating to control communications between said digital switch and said plurality of intelligent radio ports; and
programming said customer switch such that an incoming call having a called phone number is simultaneously routed to said at least one wire-based telephone and to said digital switch so that said incoming call can be answered, using either said at least one wire-based telephone or a cellular phone coupled via radio to one of said plurality of intelligent radio ports, transparently to a caller that places said incoming call.

2. The method of claim 1, further comprising the steps of:
detecting ringing at said digital switch by said controller;
receiving a number at said controller corresponding to said called phone number;
determining a mobile identification number that is associated with said called number;
selecting an intelligent radio port from said plurality of intelligent radio ports, said selected radio port being a radio port that is currently registered to said called number;
routing said call from said digital switch to said selected radio port; and
completing said incoming call at a cellular coupled to said selected radio port such that a caller placing said incoming call is unaware of whether said incoming call is answered via a wire-based telephone or a cellular phone.

3. The method of claim 1, wherein said step of programming comprises the steps of:
programming said customer switch to simultaneously route an internal call dialed via an extension number to said at least one wire-based telephone and to said digital switch so that said internal call can be answered, using either said at least one wire-based telephone or a cellular phone coupled to one of said plurality of intelligent radio ports, transparently to a caller that places said internal call; and
processing said internal call as a wire-based internal call irrespective of whether said internal call was answered via a wire-based telephone or via an intelligent radio port coupled cellular phone.

4. The method of claim 1, further comprising the steps of:
connecting said digital switch to a macrocell wireless network; and
coupling said controller to said macrocell wireless network via said digital switch.

5. The method of claim 4, further comprising the steps of:
programming said customer switch to simultaneously route an internal call dialed via an extension number to said at least one wire-based telephone and to said digital switch so that said internal call can be answered, using either said at least one wire-based telephone or a cellular phone coupled to said macrocell wireless network, transparently to a caller that places said internal call; and
processing said internal call as a cellular call when said internal call is answered via a macrocell coupled cellular phone.

6. The method of claim 1, further comprising the steps of:
programming said controller to route an internal call dialed via an extension number to a selected one of said plurality of intelligent radio ports, said selected radio port being selected based on a mobile identification number that is associated with said extension and whether said selected radio port is currently registered to said-extension;
processing said internal call as a wire-based internal call regardless of the fact that said internal call is completed via two intelligent radio ports.

7. A microcell telecommunications network coupled to an existing source of wire-based calls, said network;
CHARACTERIZED BY:
a digital switch;
a plurality of intelligent radio ports connected to said digital switch, said radio ports being capable of communicating with each other via said microcell network and also being capable of communicating with a plurality of wireless telephones via a macrocell public wireless network; and
an intelligent radio port controller connected to said digital switch, said controller providing control commands to said digital switch and to said plurality of radio ports such that an incoming call from said source of wire-based calls may be answered via a cellular telephone coupled to one of said intelligent radio ports irrespective of whether said incoming call was directed to a cellular telephone number, said incoming call being handled as a wire-based call provided that said call is answered via an intelligent radio port based cellular phone.

8. The microcell network of claim 7, wherein said source of wire-based calls is a customer switch and said incoming call is simultaneously directed to a wire-based telephone and to said digital switch so that said incoming call may be answered at either said wire-based phone or said radio port based cellular phone.

9. The microcell network of claim 7, wherein said controller is configured to provide commands for microcell communication between two cellular phones each of which is coupled to an intelligent radio port, said microcell communication being processed as wire-based calls provided that air time is restricted to occurring via said plurality of intelligent radio ports.

10. The microcell network of claim 7, wherein said controller comprises a database that includes information regarding a mobile identification number for each cellular phone currently registered to operate on said microcell network, and a last known intelligent radio port that each of said registered phones is associated with.

11. The microcell network of claim 10, wherein said controller further comprises circuitry that monitors said digital switch to detect ringing in said digital switch when a call is incoming, said incoming call having a associated phone number.

12. The microcell network of claim 11, wherein said controller further comprises circuitry that processes said incoming call when said ringing is detected based on said mobile identification number and associated radio port for a cellular phone associated with said phone number, said controller issuing commands to route said incoming call from said digital switch to said associated cellular phone.

13. A method for providing wireless telephone service in an existing wire-based environment, said method comprising the steps of:
directing an incoming call simultaneously to a wire-based telephone in said existing environment and to a digital switch in a microcell wireless network that causes ringing to occur at said digital switch, said incoming call having a phone number associated with it;
monitoring said digital switch by a controller;
receiving said phone number at said controller when said ringing is monitored;
determining which cellular phone is associated with said phone number and determining which one of a plurality of intelligent radio ports said associated cellular phone is currently registered to; and
directing said call from said digital switch to said associated cellular phone so that said call may be answered at either said associated cellular phone or said wire-based telephone transparently to a caller that placed said incoming call.

14. The method of claim 13, further comprising the step of:
processing said incoming call as a wire-based call when said incoming call is answered on said associated cellular phone and said associated cellular phone is associated with an intelligent radio port.

15. The method of claim 13, further comprising the steps of:
coupling said incoming call to a macrocell public network when said associated cellular phone is out of range of said microcell network; and
processing said incoming call as a cellular call when said incoming call is answered on said associated cellular phone and said associated cellular phone is associated with a macrocell base station.

16. The method of claim 13, wherein said incoming call is an internal called in which an extension is dialed, wherein said step of directing an incoming call comprises the step of:
directing said incoming call from an internal wire-based telephone simultaneously to another wire-based telephone and to said digital switch.

17. The method of claim 16, wherein said steps of receiving and determining comprise the steps of:
receiving said extension at said controller when said ringing is monitored; and
determining which cellular phone is associated with said extension and determining which one of said plurality of intelligent radio ports said associated cellular is currently registered to.

18. The method of claim 17, further comprising the step of:
processing said call as a wire-based call regardless of whether said call is answered via a wire-based telephone or a cellular phone coupled to an intelligent radio port.

19. The method of claim 13, wherein said incoming call is an internal called, placed from a cellular phone coupled to an intelligent radio port, in which an extension is dialed, wherein said step of directing an incoming call comprises the step of:
initiating a route request from an intelligent radio port coupled to a calling cellular phone to said controller;
determining a mobile identification number associated with said dialed extension and forwarding said identification number to said coupled radio port;
initiating ISDN call setup via said digital switch and simultaneously directing said internal call to a wire-based telephone corresponding to said dialed extension;
completing said internal call via one of said corresponding wire-based telephone and a cellular telephone coupled to an intelligent radio port associated with said dialed extension; and
processing said internal call as a wire-based call regardless of which telephone is used to answer said call.
